# DEMANDE DE BREVET EUROPEEN

(11) **EP 4 787 679 A1**
(43) Date de publication de la demande: **05.08.2026**
(21) Numéro de dépôt: 26155034.7
(22) Date de dépôt: 29.01.2026
(51) Int. Cl.: H02K 7/106, H02K 15/123, H02K 5/167

(54) **MACHINE ÉLECTRIQUE TOURNANTE À ANNEAU MAGNÉTIQUE DE FREINAGE SURMOULÉ PAR LE CARTER**

(30) Priorité: 30.01.2025 FR 2500949
(71) Demandeur: BHG, 68100 Mulhouse (FR)
(72) Inventeur: GIORDANO, Nicolas, 92700 COLOMBES (FR)
(74) Mandataire: Cabinet Bleger-Rhein-Poupon

(57) **Abrégé**

Machine électrique tournante synchrone autopilotée comportant un stator (10) muni de bobines, un rotor (1) solidarisé à un arbre central (2) et dont la périphérie est équipée d'aimants permanents (3) ou de segments aimantés, l'ensemble stator (10) / rotor (1) étant intégré dans un carter. La machine électrique tournante comporte un anneau magnétique (20) pour l'assistance au freinage et à l'immobilisation du rotor (1), ledit anneau magnétique (20) étant solidarisé au carter (40), orienté perpendiculairement à l'arbre (2) du rotor (1). L'anneau magnétique (20) est intégré dans une paroi transversale du carter refermant ledit carter en direction de l'arbre central (2), l'anneau magnétique étant monté sur ce dernier via un palier (30) ou un roulement. L'anneau magnétique (20) est divisé en segments angulaires placés à l'intérieur du carter et localisés en face des aimants permanents (3) ou des segments aimantés du rotor (1), chaque segment étant magnétisé et présentant une polarisation différente des segments adjacents.

## Description

La présente invention a trait à une machine électrique tournante synchrone autopilotée, par exemple un moteur sans balais (brushless), qui comporte communément un stator et un rotor muni d'aimants permanents ou de segments aimantés périphériques. L'ensemble stator/rotor est en l'occurrence logé dans un carter qui l'enveloppe et dont sort un arbre tournant du rotor en vue de sa liaison mécanique avec une charge externe.

Le stator est muni de bobines générant des champs magnétiques d'amplitudes et de phases variables, qui sont fonction de l'alimentation en courant de chaque bobine. Cette alimentation en courant est de fait asservie à la position des aimants permanents du rotor, des moyens de détection donnant à chaque instant la position angulaire du rotor, qui détermine ensuite la phase à donner aux champs magnétiques statoriques par les courants d'alimentation. En substance, on surveille la position des aimants permanents pour commuter le courant et mettre sous tension les bobines du stator au bon moment. Les bobines du stator sont en pratique alimentées de manière à créer en permanence, sur la périphérie du rotor, des champs magnétiques déphasés par rapport aux champs magnétiques rotoriques (en quadrature). Ces derniers cherchant à s'aligner à chaque instant avec les champs magnétiques statoriques tournants, le rotor est entraîné en rotation. La modulation de l'intensité des courants d'alimentation permet la gestion de la vitesse et du couple moteur. La commande s'effectue par des moyens de commande électronique qui pilotent principalement d'une part les signaux en retour des moyens de détection de la position du rotor et d'autre part la forme et l'intensité des courants d'alimentation des bobines du stator.

Une application préférentielle des moteurs synchrones autopilotés selon l'invention est la motorisation de volets roulants. Dans cet environnement, un des objectifs de fonctionnement vise à permettre une gestion du freinage, jusqu'à assurer une immobilisation stable de l'arbre moteur. Pour ce type de moteur, un freinage naturel résulte notamment du couple de détente, lorsque les bobines statoriques cessent d'être alimentées, et également de l'inertie mécanique du moteur et des composants qui y sont associés (réducteur externe...). Pour augmenter l'efficacité du freinage, les bobines statoriques peuvent de plus être mises en court-circuit. En cas de glissement, on limite en effet la descente de la charge, en l'occurrence le tablier du volet roulant, en court-circuitant les bobinages de manière à créer une force contre-électromotrice FCEM.

Pour obtenir un blocage stable de l'arbre moteur, on ajoute un dispositif complémentaire de stabilisation. Une solution concernant un tel dispositif a déjà été proposée par le présent déposant et fait l'objet du document EP 3 121 942. Elle est basée sur une configuration spécifique comportant des aimants permanents équipant d'une part une paroi périphérique interne d'un capot prévu pour fermer le carter enfermant l'ensemble stator/rotor, et d'autre part une paroi périphérique externe radiale d'une bague fixée à l'arbre du rotor. Ce dispositif de freinage, qui fonctionne de manière radiale, se trouve dès lors placé un peu à l'écart du moteur proprement dit, dans un prolongement axial du carter.

Une autre solution est montrée dans le document EP 3 890 165, qui décrit un rotor dont une portion d'extrémité axiale dépasse du stator et est entourée d'une bague de freinage qui est située dans la prolongation du stator. Le rotor est divisé en deux partie, une partie qui est qualifiée de « zone moteur » entourée par le stator et une partie qualifiée de « zone de freinage » qui est entourée par la bague de freinage. Il s'agit à nouveau d'un fonctionnement électromagnétique radial. Cette solution présente l'inconvénient d'augmenter sensiblement l'encombrement du moteur, puisque la partie freinage augmente d'à peu près un tiers la longueur totale du moteur, ce qui n'est pas négligeable dans de nombreux environnements.

Dans les deux cas, on augmente la longueur de la machine tournante en ajoutant dans le prolongement axial du stator une couronne à aimants permanents orientés de manière à permettre un fonctionnement selon une direction radiale, les zones aimantées se faisant face perpendiculairement à l'axe de rotation du rotor.

L'invention propose une solution qui ne reprend pas ce schéma, implémentant une configuration particulière de machine électrique tournante autopilotée conservant des caractéristiques dimensionnelles et une structure qui n'est pratiquement pas modifiée par le dispositif de freinage. Cette configuration aboutit à une gestion optimale du freinage pour le type d'application envisagée, c'est-à-dire qu'elle permet l'immobilisation stable du moteur stoppant le déplacement du volet en toute position voulue par l'utilisateur.

A ces effets, la machine électrique tournante synchrone autopilotée de l'invention, comporte classiquement un stator muni de bobines, un rotor solidarisé à un arbre central et dont la périphérie est équipée d'aimants permanents ou de segments aimantés, l'ensemble stator / rotor étant intégré dans un carter qui est tel qu'il comporte un anneau magnétique pour l'assistance au freinage et à l'immobilisation du rotor. Cet anneau magnétique est solidarisé au carter, placé axialement en regard d'une extrémité axiale du rotor et orienté perpendiculairement à l'arbre du rotor. Il est intégré dans une paroi transversale du carter refermant ledit carter en direction de l'arbre central, et monté sur ce dernier via un palier ou un roulement. L'anneau magnétique est divisé en segments angulaires placés à l'intérieur du carter et localisés en face des aimants permanents ou des segments aimantés du rotor, chaque segment étant magnétisé et présentant une polarisation magnétique différente des segments adjacents.

L'ensemble stator / rotor n'est pas modifié par l'adjonction des moyens de freinage magnétiques selon l'invention, lesquels agissent non plus périphériquement, comme dans les solutions de l'art antérieur évoquées, mais axialement, en regard des extrémités axiales des aimants ou des segments aimantés du rotor. Lorsqu'on indique que la périphérie du rotor est équipée d'aimants permanents ou de segments aimantés, on entend par là que la surface délimitant radialement le cylindre formant le rotor est équipée d'aimants permanents ou de segments aimantés, à la manière de tuiles périphérique s'étendant, dans une direction axiale, sur la longueur du rotor, les tuiles étant accolées ou proches dans une direction parallèle à l'axe du rotor. Géométriquement, on peut exprimer cela en précisant que les aimants ou les zones aimantées équipent une surface définie par les génératrices du cylindre rotorique.

On trouve dans l'art antérieur des configurations axiales, mais avec un niveau d'intégration à la machine tournante bien inférieur à celui de la présente invention. L'invention modifie à minima la structure classique rotor/stator intégrés dans un carter, de telle sorte que l'encombrement de cette structure n'est pas modifié. Dans le document CA 2 527 379 A1, par exemple, un composant de freinage en forme de disque comportant des ailettes magnétisées séparées est monté axialement, mais à l'intérieur du carter, en face du rotor. Le carter doit donc être dimensionné pour en tenir compte. Il en va de même dans le document nippon JPS55166176U, qui mentionne un moteur pas à pas comportant une plaque de freinage également positionnée à l'intérieur du carter, en regard du rotor. Dans les deux cas, la dimension axiale de la machine tournante est impactée. La configuration de la magnétisation de l'élément de freinage n'est par ailleurs pas décrite.

L'intégration de l'anneau magnétique dans une paroi transversale du carter refermant ledit carter en direction de l'arbre central, signifie que l'anneau magnétique forme une partie intégrante de ce qui fait office de flasque terminal du carter. Dans cette perspective, au lieu d'avoir un tel flasque relié à l'arbre rotatif, à l'intérieur duquel on solidarise un anneau magnétique, l'anneau magnétique est directement intégré au flasque, et c'est lui qui est monté sur l'arbre rotatif via un palier ou un roulement. L'intégration selon l'invention signifie qu'il n'y a pas d'espace spécifique, notamment dans une direction axiale du carter, qui est réservée à l'anneau magnétique.

Ce dernier ne dépasse de préférence pas de la face interne de la paroi transversale (ou flasque), vers l'intérieur du volume enclos par le carter. Les moyens de fixation permettant l'intégration de l'anneau magnétique dans cette paroi s'appliquent ainsi à sa surface périphérique radiale et sur son côté extérieur, opposé à son côté faisant face au rotor.

La machine électrique tournante de l'invention peut ainsi être telle que la paroi transversale du carter est surmoulée sur la périphérie de l'anneau magnétique ainsi que sur au moins une partie de sa face perpendiculaire à l'arbre située à l'opposé du rotor. L'anneau, dans son intégration au carter, présente en effet deux faces planes d'allure parallèle d'orientation perpendiculaire à l'axe de rotation du rotor : une face intérieure en regard dudit rotor, et une face opposée extérieure, qui est celle qui est au moins partiellement recouverte par le surmoulage du carter, lequel s'applique aussi à la périphérie extérieure de l'anneau.

L'anneau à segments magnétiques, pour être efficace, doit être proche d'une extrémité du rotor, avec un entrefer minimal entre ses parties magnétisées et les extrémités axiales des aimants périphériques du rotor, et son intégration au carter reflète cette contrainte. Le surmoulage ne concerne dès lors que sa périphérie et sa face extérieure perpendiculaire à l'arbre, par conséquent celle qui n'est pas du côté du rotor, mais à l'opposé de ce dernier, celle qui est orientée vers l'extérieur du carter. Le surmoulage réalisé enveloppe par conséquent l'anneau selon deux orientations, une orientation radiale sur le chant périphérique circulaire de l'anneau et une orientation axiale sur au moins une portion de sa surface extérieure, du côté opposé au rotor, contribuant à augmenter la résistance mécanique dans cette zone, et plus globalement à assurer fermement la fixation de l'anneau dans le carter.

Pour améliorer encore la tenue mécanique de la machine tournante dans la même zone, au moins une partie du palier ou roulement peut également être surmoulée dans la paroi transversale du carter, dans le prolongement du surmoulage de l'anneau magnétique sur sa face située à l'opposé du rotor, c'est-à-dire également sur sa face extérieure. On a vu que dans la configuration de l'invention, l'anneau magnétique est monté sur le rotor par l'intermédiaire d'un palier ou d'un roulement, ce qui contribue à sa parfaite intégration au carter, évitant tout surdimensionnement axial de la machine tournante. En substance, le surmoulage dudit anneau dans un plan perpendiculaire à l'arbre peut alors être prolongé en direction dudit arbre, ce qui aboutit à rigidifier encore plus la structure dans cette partie du carter faisant fonction de flasque latéral.

Pour aller encore plus loin dans cette perspective d'optimisation de la fixation, l'anneau magnétique peut aussi être solidarisé au palier ou roulement par surmoulage, contribuant à rigidifier efficacement cette partie de la machine tournante, c'est-à-dire au niveau de la partie du carter située au voisinage de l'arbre.

De préférence encore, le nombre de segments angulaires de l'anneau est égal au nombre d'aimants permanents ou de segments aimantés du rotor. Si le nombre de pôles magnétiques périphériques successifs est égal à n, le rotor peut atteindre n/2 positions stables, en substance toutes les positions dans lesquelles un pôle N ou S de l'un du rotor ou de l'anneau fait face à un pôle respectivement S ou N de l'autre.

D'autres buts et avantages de la présente invention apparaîtront au cours de la description qui va suivre, laquelle présente un mode préférentiel de réalisation de l'invention. Celui-ci n'est cependant donné qu'à titre d'exemple indicatif et non limitatif.

La compréhension de cette description sera facilitée en se référant aux dessins joints en annexe et dans lesquels :
La figure 1 représente une vue schématique d'une section longitudinale d'une machine tournante selon l'invention, avec un rotor doté d'un anneau de freinage/immobilisation surmoulé dans le carter selon une configuration caractéristique de l'invention ; et
La figure 2 montre de manière schématisée un détail agrandi de la solidarisation de l'anneau de freinage/blocage par surmoulage utilisé dans le cadre de l'invention.

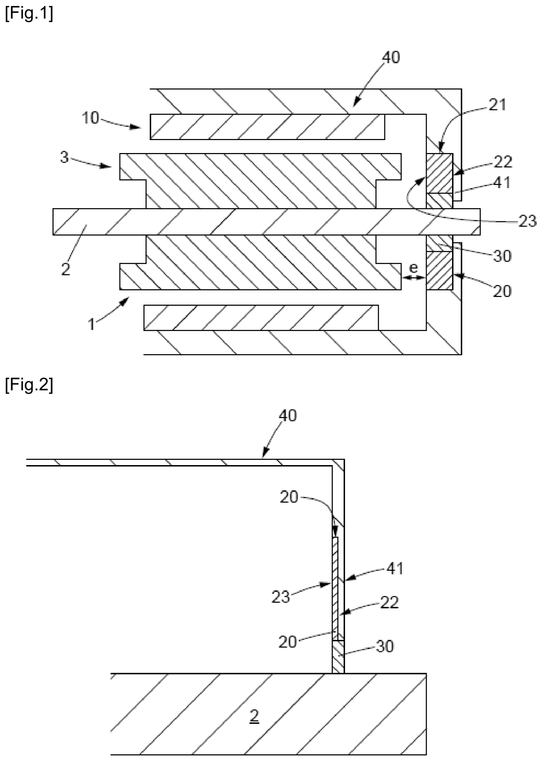

En référence à la figure 1, le rotor (1) placé à l'intérieur d'un stator (10) comporte classiquement un arbre central (2) et des aimants périphériques (3) ou des segments aimantés qui équipent la surface radiale extérieure définie par la révolution d'une génératrice du cylindre formant le rotor (1). Le rotor (1) et le stator (10) sont enclos dans un carter (40). Les aimants permanents (3) ou les segments aimantés peuvent prendre la forme de portions de couronne à la périphérie du rotor (1), recouvrant la totalité ou la quasi-totalité de la périphérie radiale du rotor (1). Les pôles des aimants (3) adjacents sont successivement inversés. Pour réaliser la fonction de freinage/blocage, un anneau (20) dont la périphérie comporte des segments angulaires magnétisés successivement en pôles Nord (N) et Sud (S) est placé axialement en regard d'une extrémité axiale du rotor (1), orienté dans un plan perpendiculaire à l'arbre (2). Cette configuration utilise, pour mettre en œuvre le freinage, les lignes de champ d'allure axiale du champ magnétique crée par les aimants permanents (3) ou par les segments aimantés de la périphérie du rotor. L'anneau magnétisé (20) est séparé de l'extrémité axiale du rotor (1) par un entrefer e.

La configuration de l'invention permet un montage simple et mécaniquement stable de l'anneau magnétique (20) dans le carter (40), par surmoulage de ce dernier s'appliquant en périphérie de l'anneau magnétisé (20), c'est-à-dire sur sa surface périphérique (21), et à l'extérieur dudit anneau magnétisé (20), sur sa surface (22) extérieure opposée au rotor (1). De la sorte, les secteurs angulaires magnétisés de la face (23) de l'anneau (20) qui est à l'intérieur du carter (40) sont directement en regard et proches de l'extrémité axiale du rotor (1) et de ses aimants (3), l'entrefer e étant réduit autant que possible en vue de conférer l'efficacité maximale à la fonction de freinage magnétique. Cette configuration dans laquelle l'anneau magnétique est en quelque sorte noyé dans le carter (40), plus précisément dans une portion radiale faisant office de flasque, permet de ne pas modifier l'encombrement global du moteur, qui reste identique à celui d'un moteur dépourvu d'anneau magnétique.

Selon une configuration possible apparaissant en figure 1, lesdits aimants permanents (3) ou les segments aimantés présentent, à chaque extrémité axiale du rotor (1), une portion terminale qui peut dépasser axialement du reste du rotor (1) et du stator (10), formant de chaque côté une couronne magnétique d'extrémité axialement protubérante. Lesdites couronnes constituent de fait des excroissances axiales de la périphérie magnétique du rotor (1), laquelle est aimantée en pôles périphériques successifs par les aimants permanents (3). L'allongement axial des aimants permanents (3) ou des segments aimantés en direction de l'anneau magnétique (20), combiné avec le positionnement perpendiculaire à l'arbre (2) de l'anneau magnétique (20), conduit à réduire l'entrefer e et permet de ce fait d'optimiser l'établissement de circuits magnétiques efficients dans la perspective du freinage, bouclant en l'occurrence dans une direction axiale.

Ainsi, le caractère protubérant de la couronne magnétique optimise le bouclage des lignes de champ magnétique entre les extrémités axiales magnétisées des aimants permanents (3) ou des segments aimantés et les segments annulaires magnétisés de l'anneau (20) sur la face (23) en regard de la couronne magnétique. Les aimants permanents (3) ou les segments aimantés offrent des extrémités magnétisées respectivement N et S (elles se succèdent) de même que les segments angulaires de l'anneau magnétique (20), avec de préférence le même nombre n de pôles de part et d'autre de l'entrefer e. L'immobilisation stable se fait alors selon une des n/2 positions prédéfinies.

Comme évoqué, dans la configuration de l'invention, l'anneau magnétique (20) de freinage de l'invention est solidarisé au carter (40) par surmoulage de ce dernier sur l'anneau (20). La figure 1 schématise cette fixation, représentant un carter (40) figuré avec une épaisseur surdimensionnée à des fins explicatives. Pour une solidarisation de l'anneau magnétique (20) selon une orientation perpendiculaire à l'arbre rotatif (2) sans obérer le freinage magnétique, le surmoulage s'applique seulement sur la surface périphérique (21) radiale de l'anneau (20) et sur sa face extérieure (22), opposée à la face intérieure (23) faisant face au rotor (1), qui est laissée nue.

Dans la configuration de la figure 1, le palier (30) (ou roulement), monté sur l'arbre (2) du rotor (1) et sur lequel est monté l'anneau magnétique (20), est lui-même partiellement surmoulé par le carter (40) - au moins sur sa partie prolongeant l'anneau magnétique (20) en direction de l'arbre (2) - via le pan (41) du carter (40). Ce pan (41) surmoule par conséquent également la face extérieure (22) de l'anneau magnétique (20). Dans ce cas, le côté du palier ou du roulement surmoulé est également le côté extérieur.

Dans la représentation partielle de la figure 2, seuls le chant périphérique circulaire (21) et la face extérieure (22) de l'anneau magnétique (20) sont surmoulés par le pan (41) du carter (40), qui ne se prolonge pas pour recouvrir le côté extérieur du palier (30) ou du roulement. L'amplitude du surmoulage extérieur dépend notamment du composant de roulement utilisé.

Selon l'invention, l'anneau magnétique (20), qui est solidarisé au palier (30) peut également être surmoulé sur ce dernier, au moins à sa périphérie radiale extérieure sur laquelle le carter (40) est prévu pour être fixé.

L'anneau magnétique (20) qui permet de mettre en œuvre le freinage magnétique est, dans l'invention, en quelque sorte intégré à un des flasques terminaux du carter (40) englobant le moteur proprement dit, c'est-à-dire essentiellement l'ensemble rotor /stator. La face intérieure de l'anneau magnétique (20) affleure dans la face intérieure dudit flasque dont elle ne dépasse pas. Sa face extérieure est au moins partiellement, et dans la plupart des cas totalement, recouverte pas le surmoulage du carter (40). Dans la configuration de l'invention, le volume global de la machine électrique tournante carterisée est pour ainsi dire le même qu'il y ait un anneau magnétique (20) permettant la mise en œuvre d'un freinage ou qu'il n'y en ait pas.

Les modalités de conception illustrées par les figures en l'espèce très schématiques ne sont bien entendu pas exhaustives de l'invention, qui englobe au contraire des variantes de forme notamment susceptible d'affecter la structure intégrant l'anneau, dont la conception n'est pas montrée avec précision dans les figures.

## Revendications

1. Machine électrique tournante synchrone autopilotée comportant un stator (10) muni de bobines, un rotor (1) solidarisé à un arbre central (2) et dont la périphérie est équipée d'aimants permanents (3) ou de segments aimantés, l'ensemble stator (10) / rotor (1) étant intégré dans un carter, comportant un anneau magnétique (20) pour l'assistance au freinage et à l'immobilisation du rotor (1), ledit anneau magnétique (20) étant solidarisé au carter (40), placé axialement en regard d'une extrémité axiale du rotor (1) et orienté perpendiculairement à l'arbre (2) du rotor (1), **caractérisé en ce que** l'anneau magnétique (20) est intégré dans une paroi transversale du carter (40) refermant ledit carter (40) en direction de l'arbre central (2), l'anneau magnétique étant monté sur l'arbre (3) du rotor (1) via un palier (30) ou un roulement, et **en ce que** ledit anneau magnétique (20) est divisé en segments angulaires placés à l'intérieur du carter et localisés en face des aimants permanents (3) ou des segments aimantés du rotor (1), chaque segment étant magnétisé et présentant une polarisation magnétique différente des segments adjacents.

2. Machine électrique tournante synchrone autopilotée selon la revendications précédente, **caractérisé en ce que** la paroi transversale du carter (40) est surmoulée sur la périphérie (21) de l'anneau magnétique (20) ainsi que sur au moins une partie de sa face (22) perpendiculaire à l'arbre (2) située à l'opposé du rotor (1).

3. Machine électrique tournante synchrone autopilotée selon la revendication précédente, **caractérisée en ce qu'**au moins une partie du palier (30) ou roulement est surmoulée dans la paroi transversale du carter (40), dans le prolongement du surmoulage de l'anneau (20) sur sa face (22) située à l'opposé du rotor (1).

4. Machine électrique tournante synchrone autopilotée selon l'une des revendications précédentes, **caractérisée en ce que** l'anneau magnétique (20) est solidarisé au palier (30) ou roulement par surmoulage.

5. Machine électrique tournante synchrone autopilotée selon l'une des revendications précédentes, **caractérisée en ce que** le nombre de segments angulaires de l'anneau (20) est égal au nombre d'aimants permanents (3) ou de segments aimantés du rotor (1).
